# EUROPEAN PATENT SPECIFICATION

(11) **EP 3 427 594 B1**
(45) Date of publication and mention of the grant of the patent: **20.08.2025**
(21) Application number: 17763207.2
(22) Date of filing: 07.03.2017
(51) Int. Cl.: A23J 1/20, A23C 9/146, A23C 9/142, A23J 3/08

(54) **FRACTIONATION METHOD FOR WHEY PROTEIN**
FRAKTIONIERUNGSVERFAHREN FÜR MOLKEPROTEIN
PROCÉDÉ DE FRACTIONNEMENT DE PROTÉINE LACTOSÉRIQUE

(30) Priority: 07.03.2016 JP 2016043959; 07.03.2016 JP 2016043958
(43) Date of publication of application: 16.01.2019
(73) Proprietor: Megmilk Snow Brand Co. Ltd., Sapporo-shi, Hokkaido 065-0043 (JP)
(72) Inventor: TAMAKI Shojiro, Sapporo-shi Hokkaido 065-0043 (JP); TOMIZAWA Akira, Sapporo-shi Hokkaido 065-0043 (JP); SHIBA Mayumi, Sapporo-shi Hokkaido 065-0043 (JP); TAKANO Makoto, Sapporo-shi Hokkaido 065-0043 (JP); IMAI Hiroshi, Sapporo-shi Hokkaido 065-0043 (JP)
(74) Representative: Reddie & Grose LLP
(86) International application number: PCT/JP2017/008899
(87) International publication number: WO 2017/154867

(56) References cited:
- CN-A- 101 948 530
- FR-A1- 2 673 359
- JP-A- 2000 050 812
- JP-A- 2007 000 094
- JP-A- H0 319 654
- JP-A- H0 662 756
- JP-A- H04 330 252
- JP-A- H05 268 879
- JP-A- H07 123 927
- US-A- 5 925 737
- US-A1- 2007 065 563
- LAETITIA M. BONNAILLIE ET AL: "Fractionation of Whey Protein Isolate with Supercritical Carbon Dioxide To Produce Enriched [alpha]-Lactalbumin and [beta]-Lactoglobulin Food Ingredients", JOURNAL OF AGRICULTURAL AND FOOD CHEMISTRY, vol. 60, no. 20, 14 May 2012 (2012-05-14), US, pages 5257 - 5266, XP055611187, ISSN: 0021-8561, DOI: 10.1021/jf3011036
- STRIPE, A. ET AL.: "Thermally induced denaturation and aggregation of BLG-A: effect of the Cu2+ and Zn2+ metal ions", EUR BIOPHYS J, vol. 37, 2008, pages 1351 - 1360, XP019654051

## Description

### Technical Field

The present invention relates to methods for fractionating whey proteins, methods for producing a composition including α-lactalbumin, and methods for producing a composition including β-lactoglobulin.

### Background Art

Whey proteins are proteins contained in milk and whey proteins in bovine milk contains approximately 50% by weight of β-lactoglobulin and approximately 20% by weight of α-lactalbumin.

Compositions containing α-lactalbumin may be used in breastmilk substitutes with a protein composition similar to human milk and nutrition compositions such as enteral nutrition diets. Moreover, β-lactoglobulin may be used for controlling physical properties and enriching nutrition of various foods. Therefore, methods for fractionating whey proteins, methods for obtaining a composition containing α-lactalbumin, and methods for obtaining a composition containing β-lactoglobulin have been studied and disclosed.

Patent Literature 1 discloses a method for efficiently fractionating β-lactoglobulin, α-lactalbumin, and lactoferrin from various bovine milk whey, involving first separating β-lactoglobulin constituting approximately 50% of the whey proteins and other proteins by adding NaCl to the whey to have proteins other than β-lactoglobulin adsorbed onto a hydrophobic interaction chromatography resin, then eluting α-lactoglobulin and lactoferrin adhered onto the resin, and conducting fractionation by ultrafiltration.

Patent Literature 2 discloses a process for obtaining an α-lactalbumin enriched fraction by adjusting pH of unpasteurized cheese whey or unpasteurized lactic acid whey to 6.3-7.0 and the temperature thereof to 30-60°C, processing this with an ultrafilter with a molecular weight cut-off of 5,000 or more, and subjecting a filtrate obtained thereby to further diafiltration with an ultrafilter with a molecular weight cut-off of 1,200 or 2,000. It is disclosed that the composition obtained here contains 56% by weight of α-lactalbumin and 37% by weight of β-lactoglobulin and this may be used as a composition having a protein composition similar to that of breast milk or an enteral nutrition diet used in intensive care.

Patent Literature 3 discloses a process involving using a starting material containing whey or purified whey proteins and adjusting pH of the starting material to 4 to 6 when the ash content of the starting material is 0 to 1% and to 6 to 8 when the ash content is 1 to 3%, then bringing the starting material in contact with a strongly basic anion exchanger to allow β-lactoglobulin to be adsorbed onto the ion-exchanger, and then eluting β-lactoglobulin from the ion-exchanger with a solution with a high ionic strength. However, Patent Literature 3 does not disclose the contents of β-lactoglobulin and α-lactalbumin in the obtained composition.

The methods mentioned above have been disclosed, but a method for fractionating whey proteins more easily at an industrial level, a method for producing a composition including α-lactalbumin, and a method for producing a composition including β-lactoglobulin are desired.

### Citation List

### Patent Literature

Patent Literature 1: Japanese Patent Laid-Open No. 7-203863
Patent Literature 2: U. S. Patent No. 4711953
Patent Literature 3: Japanese Patent Laid-Open No. 3-19654
Patent Literature 4: Laetitia M. Bonnaillie et al.: "Fractionation of Whey Protein isolate with supercritical carbon dioxide to produce enriched α-lactalbumin and β-lactoglobulin food ingredients", Journal of Agricoltural and Food Chemistry, vol. 60, no. 20, 14 May 2012 (2012-05-14), pages 5257-5266, XP055611187, DOI: 10.1021/jf3011036.
Patent Literature 5: U. S. Patent No. 5925737A
Patent Literature 6: FR 2673359A1
Patent Literature 7: Chinese Patent No. CN 101948530A
Patent Literature 8: Japanese Patent No. JP H05268879A

### Summary of Invention

### Technical Problem

An object of the present invention is to provide a method for fractionating whey proteins.

### Solution to Problem

To achieve the aforementioned object, the present invention relates to the following embodiments.
(1) A method for fractionating whey proteins, comprising: preparing a solution comprising a first whey protein, wherein the first whey protein is a whey protein mainly comprising β-lactoglobulin, a second whey protein,
   wherein the second whey protein is a whey protein mainly comprising α-lactalbumin and a carbonate ion and/or hydrogen carbonate ion, and a light metal ion and/or a transition metal ion, wherein the light metal and/or transition metal ions are selected from sodium, potassium, magnesium, calcium, manganese, iron, copper, and zinc ions; wherein the first whey protein mainly comprising β-lactoglobulin forms a complex with a carbonate ion and/or hydrogen carbonate ion, and a light metal ion and/or a transition metal ion; and the second whey protein mainly comprising α-lactalbumin satisfies the following (i):
   (i) the α-lactalbumin forms no complex with any of carbonate ion and hydrogen carbonate ion; separating the first whey protein complex and the second whey protein with a membrane.
(2) The method for fractionating whey proteins according to (1), wherein the solution has a total concentration of the first whey protein and the second whey protein of 0.001% by weight to 35% by weight; a total concentration of the carbonate ion and/or the hydrogen carbonate ion of 0.001% by weight to 35% by weight; and a pH of 5 to 10.
(3) The method for fractionating whey proteins according to (1) or (2), wherein a total concentration of the light metal ion and/or the transition metal ion is 0.00001% by weight to 10% by weight.
(4) The method for fractionating whey proteins according to any one of (1) to (3), comprising one or more steps selected from the group consisting of a concentration step, a diafiltration step, a sterilization step, a freezing step, a drying step, and a powdering step.

### Advantageous Effects of Invention

The present invention provides methods for fractionating whey proteins.

### Brief Description of Drawings

[Figure 1] Figure 1 is a flow chart of a method for fractionating whey proteins/a method for producing a composition containing LA.
[Figure 2] Figure 2 is a flow chart of a method for producing a composition containing LG.

### Description of Embodiments

Methods for fractionating whey proteins will be described in detail below.

Hereinafter, α-lactalbumin may be also referred to as "LA", β-lactoglobulin as "LG", a whey protein concentrate as "WPC", and a whey protein isolate as "WPI".

The present inventors have found that mixing (A) a whey protein and (B) carbonate ion and/or hydrogen carbonate ion results in the formation of a complex of (A) the whey protein-(B) the carbonate ion and/or hydrogen carbonate ion (hereinafter, referred to as "Complex 1"), but LA does not participate in the formation of Complex 1 and does not form Complex 1.

The present inventors also found that mixing (A) a whey protein, (B) carbonate ion and/or hydrogen carbonate ion, and (C) a light metal ion and/or a transition metal ion results in the formation of
a complex of (A) the whey protein-(B) carbonate ion and/or hydrogen carbonate ion-(C) the light metal ion and/or the transition metal ion, and/or
a complex of Complex 1- (A) the whey protein-(B) carbonate ion and/or hydrogen carbonate ion-(C) the light metal ion and/or the transition metal ion
   (hereinafter, referred to as "Complex 2"), but LA does not participate in the formation of Complex 2 and does not form Complex 2. Accordingly, an aspect of the present invention is based on the finding of the fact that LA is not contained in Complex 2.

### (Method for fractionating whey proteins and method for producing composition containing LA)

A method for fractionating whey proteins includes preparing a solution including a first whey protein and a second whey protein and separating the first whey protein and the second whey protein with a membrane.

The first whey protein forms a complex with at least any one of carbonate ion, hydrogen carbonate ion, a light metal ion, and a transition metal ion; and the second whey protein satisfies the following (1):
(1) the second whey protein forms no complex with any of carbonate ion and hydrogen carbonate ion.

### (Protein material)

Protein materials to be used in the method for fractionating whey proteins and the method for producing a composition containing LA will be described.

The (first and second) protein materials may be any protein materials as long as they include a whey protein and are derived from mammals such as cow, buffalo, sheep, goat, and horse and may be composed of a single raw material or a combination of plural raw materials.

Specific examples include whey obtained in the production of cheese from milk such as milk from cow, buffalo, sheep, goat, and horse; whey obtained by adding acid such as lactic acid to milk such as milk from cow, buffalo, sheep, goat, and horse; powders of such whey; and products in which whey proteins are concentrated by reducing lactose and/or mineral in such whey. Among these, preferred protein materials to be used in the method for fractionating whey proteins and the method for producing a composition containing LA are WPC and WPI with little unwanted components such as lactose and fats and a total percentage of LA and LG relative to the total solid contents of 50% by weight or more.

The first whey protein mainly comprises β-lactoglobulin and the second whey protein mainly comprises α-lactalbumin.

The carbonate ion and hydrogen carbonate ion will be described.

The carbonate ion and hydrogen carbonate ion to be used in the method for fractionating whey proteins and the method for producing a composition containing LA may be generated from any component and by any method as long as such component and method generate the ions in aqueous solutions and carbonate ion and/or hydrogen carbonate ion may be generated from a single compound or a combination of plural compounds and/or by a method or a combination of methods illustrated below.

Examples of such methods include methods involving adding carbon dioxide, such as blowing gaseous carbon dioxide or adding liquid or solid carbon dioxide; methods involving adding a hydrogen carbonate salt such as sodium hydrogen carbonate or potassium hydrogen carbonate or a carbonate salt such as sodium carbonate or potassium carbonate; methods involving adding carbonated water; and the like.

The light metal ion and the transition metal ion will be described.

The light metal ion and the transition metal ions may be any light and transition metal ions, respectively, as long as they are monovalent to trivalent cations and may each be one or more metal ions. The sources of these metal ions may be inorganic or organic salts of the light metal and/or the transition metal.

The light metal and/or transition metal ions are those present in foods or human bodies, such as sodium, potassium, magnesium, calcium, manganese, iron, copper, and zinc ions.

If a salt of carbonate ion or hydrogen carbonate ion is used in the generation of the carbonate ion and/or hydrogen carbonate ion described above, it is not necessary to add a metal ion source other than the salt. For example, if sodium hydrogen carbonate is used as the carbonate ion and/or hydrogen carbonate ion, an inorganic or organic salt of sodium or other light metal or transition metal may be or not be added.

Membranes to be used in the method for fractionating whey proteins and the method for producing a composition containing LA will be described. The membrane used in the fractionation of Complex 1 and LA may be any membrane as long as the membrane has a fractionation molecular weight of 50,000 or less and LA can pass through the membrane. The membrane used in the fractionation of Complex 2 and LA may be any membrane as long as the membrane has a fractionation molecular weight of 300,000 or less and LA can pass through the membrane.

The membrane used in the concentration of the composition containing LA obtained as a filtrate fraction of the membrane treatment described above may be any membrane as long as the membrane has a fractionation molecular weight of 14,000 or less and LA can be concentrated with the membrane.

The membrane may be any membrane of a material and with a way of filtration generally used as long as the fractionation molecular weight of the membrane is in the range described above.

Examples of the material of the membrane include organic membranes such as polyacrylamide, regenerated cellulose, polyethylene, tetrafluoroethylene, polypropylene, acetylcellulose, polyacrylonitrile, polyimide, polysulfone, and polyethersulfone; and inorganic membranes such as aluminum oxide, zirconium oxide, titanium oxide, stainless steel, and glass.

Examples of the type of the membrane module include the pleat type module, the spiral type module, the monolith type module, and the tube type module.

Examples of the mode of the membrane filtration include dead end filtration, cross-flow filtration, and diafiltration.

### (Flow chart)

Figure 1 is a flow chart of a method for fractionating whey proteins/a method for producing a composition containing LA. The method for fractionating whey proteins and the method for producing a composition containing LA will be described referring to the flow chart set forth in Figure 1. Although the description will be made for the method example illustrated in Figure 1, the present invention is not limited to this method example.

First, in STEP 101: PREPARATION OF SOLUTION, a solution including (first and second) whey proteins is prepared. The solution including whey proteins are preferably prepared in STEP 101a if the solution includes no metal ion and in STEP 101b if the solution includes a metal ion.

STEP 101a: if the solution including whey proteins includes no metal ion, it is preferred to prepare an aqueous solution with the materials described above such that the solution has a total concentration of the (first and second) whey proteins of 0.001% by weight to 35% by weight; a total concentration of carbonate ion and hydrogen carbonate ion in the solution of 0.001% by weight to 35% by weight; and a pH of 5 to 10.

The preparation of the aqueous solution including whey proteins and carbonate ion and/or hydrogen carbonate ion at the concentrations described above at pH of 5 to 10 results in the formation of Complex 1 by the interaction between the whey proteins except LA and carbonate ion and/or hydrogen carbonate ion. LA does not participate in the formation of Complex 1 and LA does not form Complex 1. Any precipitate containing protein is not observed during and after preparation of the aqueous solution from the materials described above. The protein materials and the materials to be a source of carbonate ion and/or hydrogen carbonate ion may be added in any order. The temperature of the solution is not needed to be adjusted, but is preferably 0°C to 15°C in consideration of growth of microorganisms.

STEP 101b: if the solution including whey proteins includes a metal ion, it is preferred to prepare an aqueous solution with the materials described above such that the total concentration of the (first and second) whey proteins in the solution is 0.001% by weight to 35% by weight; the total concentration of carbonate ion and hydrogen carbonate ion in the solution is 0.001% by weight to 35% by weight; the total concentration of light metal and/or transition metal ions is 0.00001% by weight to 10% by weight, and pH of the solution is 5 to 10. It is preferred to prepare an aqueous solution including the whey proteins, carbonate ion and/or hydrogen carbonate ion, and the light metal and/or transition metal ions at the concentrations described above at pH of 5 to 10.

Complex 2 is formed by the interaction of the whey proteins except LA, carbonate ion and/or hydrogen carbonate ion, and the light metal and/or the transition metal ions. LA does not participate in the formation of Complex 2 and LA does not form Complex 2.

In the preparation of the Complex 2, the state where only carbonate ion and/or hydrogen carbonate ion and a metal ion source that reacts and produce a precipitate are dissolved is not preferred, but otherwise the materials may be added in any order. Any precipitate containing protein is not observed during and after preparation of the aqueous solution from the materials described above.

The temperature of the solution is not needed to be adjusted, but is preferably 0°C to 15°C in consideration of growth of microorganisms.

Next, in STEP 103: CONCENTRATION TREATMENT A, the solution obtained in STEP 101 is subjected to a concentration treatment with a membrane with which the solution can be concentrated. Complex 1 is subjected to the concentration treatment if an aqueous solution including LA and Complex 1 is prepared in STEP 101, and Complex 2 is subjected to the concentration treatment if an aqueous solution including LA and Complex 2 is prepared in STEP 101. For fractionating LA and Complex 1, a membrane having a fractionation molecular weight of 50,000 or less is preferably used (STEP 103a). For fractionating LA and Complex 2, a membrane having a fractionation molecular weight of 300,000 or less is preferably used (STEP 103b). Depending on the content of Complex 1 and Complex 2, one or both steps of STEPs 103a and 103b can be performed.

CONCENTRATE 1 obtained by this treatment contains a large amount of Complex 1 when an aqueous solution including Complex 1 is prepared and a large amount of Complex 2 when an aqueous solution including Complex 2 is prepared.

Meanwhile, the filtrate, that is to say, LA-CONTAINING FILTRATE 2, contains a large amount of LA. Here, LA and LG are fractionated and a composition containing LA is obtained.

The treatment conditions such as sample temperature, average working pressure, membrane surface flow velocity, concentration ratio, and the like in this treatment may be adjusted as appropriate such that the LA content in the filtrate and/or the LG content in the concentrate should be around 50 to 100% by weight per total solid contents.

In STEP 105: CONCENTRATION TREATMENT B, LA-CONTAINING FILTRATE 2 may be subjected to a concentration treatment with a membrane that can be used to concentrate LA. In this way, the solid contents of the composition containing LA can be adjusted as desired. In CONCENTRATION TREATMENT B, a membrane having a fractionation molecular weight of 14,000 or less with which LA can be concentrated is preferably used.

The concentrate obtained by this treatment, that is to say, LA CONCENTRATE 3 is a composition containing LA. Meanwhile, the filtrate, that is to say, FILTRATE 4 includes almost no proteins.

The treatment conditions such as sample temperature, average working pressure, membrane surface flow velocity, concentration ratio, and the like in the concentration treatment may be adjusted as appropriate such that the composition containing LA should be efficiently concentrated.

The concentration treatment of the composition containing LA in STEP 105 may be performed by a method such as freeze concentration or vacuum evaporation concentration, other than the concentration with the membrane described above.

In STEP 108: DF TREATMENT C, CONCENTRATE 1 (a fraction containing Complex 1 or Complex 2) obtained in STEP 103 may be subjected to a diafiltration (hereinafter referred to as "DF") treatment depending on desired purity and recovery of LA. The "DF treatment" refers to a method involving treating CONCENTRATE 1 with a membrane that can be used to concentrate CONCENTRATE 1 while adding a suitable liquid to CONCENTRATE 1 as appropriate. For the DF treatment, filtered water, ion exchanged water, distilled water, ultra pure water, a filtrate produced in the membrane treatment step, a solution whose pH or ionic strength is adjusted, or a mixture of these liquids generally used for the DF treatment may be used.

With this DF treatment, the content of Complex 1 or Complex 2 per total solid contents in the fraction retained before the membrane, that is to say, CONCENTRATE 5 becomes higher. Meanwhile, a composition containing LA is obtained as LA-CONTAINING FILTRATE 6, which is the filtrate through the membrane.

The treatment conditions such as sample temperature, average working pressure, membrane surface flow velocity, concentration ratio, and the like in DF TREATMENT C in STEP 108 may be adjusted as appropriate such that the LA content in the filtrate should be around 50 to 100% by weight per total solid contents.

In STEP 110: CONCENTRATION TREATMENT D, LA-CONTAINING FILTRATE 6 may be subjected to a concentration treatment similar to that of STEP 105. The concentrate obtained in this treatment, that is to say, LA CONCENTRATE 7 is a composition containing LA. Meanwhile, FILTRATE 8 contains almost no proteins as similar to FILTRATE 4 obtained by STEP 105.

Two or more of STEP 103, 108, 105, and 110 (CONCENTRATION TREATMENT A, DF TREATMENT C, CONCENTRATION TREATMENT B, or CONCENTRATION TREATMENT D) in Figure 1 can be combined and may be combined as appropriate for the purpose of attaining desired LA content, LA recovery, or control of facilities, energy cost, or the drainage, or the like.

The obtained composition containing LA may be dried by a conventional method into powder after subjected to sterilization by a conventional method as needed.

Moreover, by setting the temperature of steps of producing protein materials to be used in this method and steps in the method of preparing the composition containing LA at a temperature that does not have a large effect on the denaturation of LA (for example, lower than 62°C), a composition containing LA in which most (for example, 70% or more) of the LA contained is native can be obtained.

The method for fractionating whey proteins/method for producing a composition containing LA may include one or more steps selected from the group consisting of a concentration step, a diafiltration step, a sterilization step, a freezing step, a drying step, and a powdering step.

### (Method for producing composition containing LG)

The method for producing a composition containing LG has been completed based on the finding that mixing (A) a whey protein and (B) carbonate ion and/or hydrogen carbonate ion results in the formation of a complex of (A) the whey protein-(B) carbonate ion and/or hydrogen carbonate ion (hereinafter, referred to as "Complex 1 including LG"), but LA does not participate in the formation of Complex 1 including LG and does not form Complex 1 including LG.

Moreover, in the method for producing a composition containing LG, mixing (A) a whey protein, (B) carbonate ion and/or hydrogen carbonate ion, and (C) a light metal ion and/or a transition metal ion results in the formation of a complex of (A) the whey protein-(B) carbonate ion and/or hydrogen carbonate ion-(C) the light metal ion and/or the transition metal ion and/or a complex of Complex 1 including LG- (A) the whey protein-(B) carbonate ion and/or hydrogen carbonate ion-(C) the light metal ion and/or the transition metal ion (hereinafter, referred to as "Complex 2 including LG"), but LA does not participate in the formation of Complex 2 including LG and does not form Complex 2 including LG. Accordingly, the present invention is based on the finding of the fact that LA is not contained in Complex 2 including LG.

The protein materials, carbonate ion and hydrogen carbonate ion, the light metal ion and/or the transition metal ion, and the membrane used in the method for producing a composition containing LG may be the same as those used in the method for fractionating whey proteins and the method for producing a composition containing LA described above.

### (Flow chart)

Figure 2 is a flow chart of a method for producing a composition containing LG. The method for producing a composition containing LG will be described referring to the flow chart in Figure 2. Although the description will be made for the method example illustrated in Figure 2, the present invention is not limited to this method example.

First, in STEP 201: PREPARATION OF SOLUTION, a solution including (first and second) whey proteins is prepared. The solution including whey proteins are preferably prepared in STEP 201a if the solution includes no metal ion and in STEP 201b if the solution includes a metal ion.

STEP 201a: if the solution including whey proteins includes no metal ion, it is preferred to prepare an aqueous solution with the materials described above such that the solution has a total concentration of the (first and second) whey proteins of 0.001% by weight to 35% by weight; a total concentration of carbonate ion and/or hydrogen carbonate ion of 0.001% by weight to 35% by weight; and a pH of 5 to 10. The preparation of the aqueous solution including whey proteins and carbonate ion and/or hydrogen carbonate ion at the concentrations described above at pH of 5 to 10 results in the formation of Complex 1 including LG by the interaction between the whey proteins except LA and the carbonate ion and/or the hydrogen carbonate ion. LA does not participate in the formation of Complex 1 including LG and does not form Complex 1 including LG. Any precipitate containing protein is not observed during and after preparation of the aqueous solution from the materials described above. The protein materials and the materials to be a source of carbonate ion and/or hydrogen carbonate ion may be added in any order. The temperature of the solution is not needed to be adjusted, but preferably of 0°C to 15°C in consideration of growth of microorganisms.

STEP 201b: if the solution including whey proteins includes a metal ion, it is preferred to prepare an aqueous solution with the materials described above such that the total concentration of the (first and second) whey proteins in the solution is 0.001% by weight to 35% by weight; the total concentration of carbonate ion and/or hydrogen carbonate ion in the solution is 0.001% by weight to 35% by weight; the total concentration of the light metal and/or transition metal ions is 0.00001% by weight to 10% by weight, and pH of the solution is 5 to 10. The preparation of the aqueous solution including whey proteins, carbonate ions and/or a hydrogen carbonate ions, light metal and/or the transition metal ions at the concentrations described above at pH of 5 to 10 results in the formation of Complex 2 by the interaction of the whey proteins except LA, the carbonic acid ion and/or the hydrogen carbonate ion, and the light metal and/or the transition metal ions. LA does not participate in the formation of Complex 2 including LG and does not form Complex 2 including LG.

In the preparation of the Complex 2 including LG, the state where only carbonate ion and/or hydrogen carbonate ion and a metal ion source that reacts and produce a precipitate are dissolved is not preferred, but otherwise the materials may be added in any order. Any precipitate containing protein is not observed during and after preparation of the aqueous solution from the materials described above.

The temperature of the solution is not needed to be adjusted, but is preferably 0°C to 15°C in consideration of growth of microorganisms.

Next, in STEP 203: CONCENTRATION TREATMENT A, the solution obtained in STEP 201 is subjected to a concentration treatment with a membrane with which the solution can be concentrated. Complex 1 including LG is subjected to the concentration treatment if an aqueous solution including Complex 1 is prepared in STEP 201 and Complex 2 including LG is subjected to the concentration treatment if an aqueous solution including LA and Complex 2 is prepared in STEP 201. For fractionating LA and Complex 1 including LG, a membrane having a fractionation molecular weight of 50,000 or less is preferably used (STEP 203a). For fractionating LA and Complex 2 including LG, a membrane having a fractionation molecular weight of 300,000 or less is preferably used (STEP 203b). Depending on the content of Complex 1 including LG and Complex 2 including LG, one or both steps of STEPs 203a and 203b can be performed.

After this treatment, LA is mainly contained in the filtrate LA-CONTAINING FILTRATE 2. In this way, CONCENTRATE 1 contains a large amount of Complex 1 including LG when an aqueous solution including Complex including LG 1 is prepared and a large amount of Complex 2 when an aqueous solution including Complex 2 including LG is prepared, and a composition containing LG is obtained here.

The treatment conditions such as sample temperature, average working pressure, membrane surface flow velocity, concentration ratio, and the like in this treatment may be adjusted as appropriate such that LG content in the concentrate should be around 50-100% by weight per total solid contents.

In STEP 208: DF TREATMENT B, CONCENTRATE 1 (a fraction including Complex 1 including LG or Complex 2 including LG) obtained in STEP 203 may be subjected to a DF treatment depending on desired purity and recovery of LG. For DF, filtered water, ion exchanged water, distilled water, ultra pure water, a filtrate produced in the membrane treatment step, a solution whose pH or ionic strength is adjusted, or a mixture of these liquids generally used for the DF treatment may be used.

With this treatment, the content of Complex 1 including LG or Complex 2 including LG per total solid contents in the fraction retained before the membrane, that is to say, CONCENTRATE 3 becomes higher. Meanwhile, LA-CONTAINING FILTRATE 5, which is the filtrate through the membrane, is obtained as a composition containing LA.

The treatment conditions such as sample temperature, average working pressure, membrane surface flow velocity, concentration ratio, and the like in the DF treatment may be adjusted as appropriate such that LG content in the concentrate should be around 50-100% by weight per total solid contents.

In STEP 210: DEMETALLIZATION, a component having the effect of chelating metal or a component having the effect of decreasing pH of the fraction to 3.0 or lower may be added to CONCENTRATE 3 (the obtained fraction containing Complex 1 including LG or Complex 2 including LG) as needed to dissociate metal ions from Complex 1 including LG or Complex 2 including LG.

By subjecting this for a treatment with a membrane or electrodialysis, a composition containing LG with reduced metal can be obtained.

Examples of the component having the chelating effect include citric acid, ascorbic acid, ethylenediaminetetraacetic acid, and the like.

Examples of the component having the effect of reducing pH include hydrochloric acid, sulfuric acid, nitric acid, and the like.

Furthermore, the solution may be subjected to STEP 214: STERILIZATION and STEP 216: DRYING into powder by a conventional method as needed. The obtained dried powder may be used as a metal solubilization agent.

By setting all temperatures of steps of producing the protein materials used in this method and steps involving the composition containing LG described above at a temperature lower than 78°C, a composition in which most (for example, 70% or more) of LG contained is native can be obtained.

Two or more of STEPs 203, 208, 210 (CONCENTRATION TREATMENT A, DF TREATMENT B and DEMETALLIZATION, STERILIZATION, and/or DRYING) in Figure 2 can be combined and may be combined as appropriate for the purpose of attaining desired LG content, LG recovery, or control of facilities, energy cost, or the drainage, or the like.

The method for producing a composition containing LG may include one or more steps selected from the group consisting of a concentration step, a diafiltration step, a sterilization step, a freezing step, a drying step, and a powdering step. Moreover, treatment temperature of all steps may be set at a temperature lower than 72°C to obtain a composition including β-lactoglobulin, in which 70% or more of the β-lactoglobulin included in the composition is native.

### Examples

Examples of the present invention will be described in detail below, but the present invention is not limited to them.

### (Test Example 1: Fractionation of LA and LG by formation of Complex 2)

### Materials

As whey protein materials, Whey powder 1 and Whey powder 2 were used. Whey powder 1 is a powder obtained by subjecting cheese whey to ion exchanging and ultrafiltration treatments to have a whey protein content of 93.9% by weight. Whey powder 2 is a powder obtained by subjecting acid whey to ion exchanging and ultrafiltration treatments to have a whey protein content of 93.5% by weight.

As a carbonate ion and/or hydrogen carbonate ion material, sodium hydrogen carbonate was used.

Magnesium chloride, 6-hydrate and potassium chloride were used as light metal ion materials and manganese dichloride, 4-hydrate; iron sulfate, 7-hydrate; ferric chloride, 6-hydrate; ferric sulfate; and copper sulfate, 5-hydrate were used as transition metal ion materials.

Sodium hydroxide was used for the preparation of Comparative Examples. All the water used in Examples and Comparative Example was ion exchanged water.

Aqueous solutions according to Examples 1 to 20 and Comparative Examples 1 to 5 set forth in Table 1 were prepared using the materials described above. pH of the prepared aqueous solution was 7.8-to 8.3. No precipitates were observed during or after the preparation of the aqueous solutions.

The prepared aqueous solutions were filtered by dead end filtration with centrifugation at 4000 G, for 15 minutes. Filter membranes that are made of polyethersulfone and have fractionation molecular weights of 50,000, 100,000, and 300,000 and one that is made of regenerated cellulose and has a fractionation molecular weight of 50,000 were used.

The solution passed through a membrane filter was collected and the amounts of LA and LG contained in the filtrate were measured. The amounts of LA and LG were measured by high performance liquid chromatography. The measurement conditions were set according to the method of Bordin et al (Journal of Chromatography A. (2001) 928, 1, 63-76).

Examples 1 to 20, which were the filtrates obtained by forming Complex 2 and filtering the solutions with a membrane as filtrates containing LA, had increased LA/LG ratios as set forth in Table 1. Accordingly, it was found that Complex 2 tends to not pass through the filter membrane and LA tends to pass through the filter membrane and LA and Complex 2 were fractionated to provide a composition containing LA as a filtrate.

Examples set forth in Table 1 had higher LA/LG ratios at all conditions than Comparative Examples, to which only a metal salt was added, and LA and LG were fractionated more efficiently in Examples 1 to 20 than Comparative Examples 1 to 5.

The LA/LG ratio was high in the filtrates through the membrane filters having a fractionation molecular weight of 50,000. Meanwhile, there was no difference between membranes made of regenerated cellulose and polyethersulfone.

The LA/LG ratios of the filtrates obtained by filtration similar to that described above after allowing the aqueous solutions of Examples 1 to 20 and Comparative Examples 1 to 5 before filtration to stand at 10°C for 24 hours were 98-103% of the values set forth in Table 1 and approximately the same. Moreover, no precipitates were observed in the solutions allowed to stand for 24 hours.

### [Table 1]

**(Table 1)**

| | Whey protein | | | Hydrogen carbonate ion/carbonate ion | | Metal ion | | Filter membrane | | LA/LG ratio of filtrate through filter membrane |
|---|---|---|---|---|---|---|---|---|---|---|
| | Material used | LA/LG ratio | Concentration (% by weight) | Material used | Concentration (% by weight) | Material used | Concentration (% by weight) | Material | Fractionation molecular weight (× 1,000) | |
| Example 1 | Whey powder 1 | 0.3 | 1 | Sodium hydrogen carbonate | 0.01 | Potassium chloride | 0.1 | Polyethersulfone | 50 | 2.06 |
| Example 2 | | | | | | Magnesium chloride, 6-hydrate | | | | 3.75 |
| Example 3 | | | | | | Manganese dichloride, 4-hydrate | | | | 2.86 |
| Example 4 | | | | | | Ferric chloride, 6-hydrate | | | | 4.54 |
| Example 5 | | | | | | Iron sulfate, 7-hydrate | | | | 2.36 |
| Example 6 | | | | | | Ferric sulfate | | | | 1.84 |
| Example 7 | | | | | | Copper sulfate, 5-hydrate | | | | 10.00 |
| Comparative Example 1 | | | | - | 0 | Sodium hydroxide | | | | 0.84 |
| Example 8 | Whey powder 2 | 0.3 | 1 | Sodium hydrogen carbonate | 0.01 | Ferric chloride, 6-hydrate | 0.1 | Regenerated cellulose | 50 | 6.85 |
| Example 9 | | | | | | Iron sulfate, 7-hydrate | | | | 2.55 |
| Example 10 | | | | | | Ferric sulfate | | | | 3.40 |
| Example 11 | | | | | | Copper sulfate, 5-hydrate | | | | 8.79 |
| Comparative Example 2 | | | | - | 0 | Sodium hydroxide | | | | 1.03 |
| Example 12 | | | | Sodium hydrogen carbonate | 0.01 | Ferric chloride, 6-hydrate | 0.1 | Polyethersulfone | | 5.23 |
| Example 13 | | | | | | Iron sulfate, 7-hydrate | | | | 2.57 |
| Example 14 | | | | | | Ferric sulfate | | | | 3.34 |
| Example 15 | | | | | | Copper sulfate, 5-hydrate | | | | 9.23 |
| Comparative Example 3 | | | | - | 0 | Sodium hydroxide | | | | 1.03 |
| Example 16 | | | | Sodium hydrogen carbonate | 0.01 | Ferric chloride, 6-hydrate | 0.1 | Polyethersulfone | 100 | 1.63 |
| Example 17 | | | | | | Iron sulfate, 7-hydrate | | | | 1.26 |
| Example 18 | | | | | | Copper sulfate, 5-hydrate | | | | 3.53 |
| Comparative Example 4 | | | | - | 0 | Sodium hydroxide | | | | 0.99 |
| Example 19 | | | | Sodium hydrogen carbonate | 0.01 | Ferric chloride, 6-hydrate | 0.1 | | 300 | 0.87 |
| Example 20 | | | | | | Copper sulfate, 5-hydrate | | | | 1.21 |
| Comparative Example 5 | | | | - | 0 | Sodium hydroxide | | | | 0.54 |

### (Test Example 2: Fractionation of LA and LG by formation of Complex 1)

### Materials

As whey protein materials, Whey powder 1 and Whey powder 2 were used.

For the preparation of Reference Example 21, sodium hydrogen carbonate was used as a carbonate ion and/or hydrogen carbonate ion material and ion exchanged water was used as water.

For Reference Example 22 and Reference Example 23, ion exchanged water saturated with carbon dioxide (carbonated water) was used as a carbonate ion and/or hydrogen carbonate ion material.

Aqueous solutions according to Reference Example 21 to Reference Example 23 set forth in Table 2 were prepared with the materials described above. No precipitates were observed during or after the preparation of the aqueous solutions.

The prepared aqueous solutions were filtered by dead end filtration with centrifugation at 4000 G, for 15 minutes. The filter membrane that is made of polyethersulfone and has a fractionation molecular weight of 50,000 was used.

The solutions that have passed through the filter membrane were collected and the amounts of LA and LG contained in the solutions were measured by high performance liquid chromatography. The measurement conditions were set according to the method of Bordin et al (Journal of Chromatography A. (2001) 928, 1, 63-76).

As illustrated in Table 2, the LA/LG ratios of the obtained filtrate was increased by adding whey protein and a component that generates carbonate ion and/or hydrogen carbonate ion and filtering the solutions containing them with the membrane. Accordingly, it was found that Complex 1 tends to not pass through the filter membrane and LA tends to pass through the filter membrane and LA and Complex 1 were fractionated to provide a composition containing LA as a filtrate.

Moreover, Reference Example 21 to Reference Example 23 set forth in Table 2 had higher LA/LG ratios and fractionated more efficiently at all conditions than the solutions before the treatment and Comparative Examples set forth in Table 1.

The LA/LG ratios of the filtrates obtained by filtration similar to that described above after allowing the aqueous solutions before filtration to stand at 10°C for 24 hours were 95-101% of the values set forth in Table 2 and approximately the same (data not shown). Moreover, no precipitates were observed in the solutions allowed to stand for 24 hours.

### [Table 2]

**(Table 2)**

| | Whey protein | | | Filter membrane | | Hydrogen carbonate ion/carbonate ion | LA/LG ratio of filtrate through filter membrane |
|---|---|---|---|---|---|---|---|
| | Material used | LA/LG ratio | Concentration (% by weight) | Material | Fractionation molecular weight (× 1,000) | | |
| Reference Example 21 | Whey powder 1 | 0.3 | 15 | Polyethersulfone | 50 | 1.5% by weight sodium hydrogen carbonate | 3.23 |
| Reference Example 22 | | | | | | Saturated carbonated water | 6.24 |
| Reference Example 23 | Whey powder 2 | | | | | | 2.24 |

### (Test Example 3: Effect of pH on fractionation of LA and LG)

As a whey protein material, Whey powder 3 was used. Whey powder 3 is a powder obtained by subjecting cheese whey to ion exchanging and ultrafiltration treatments to have a whey protein content of 95.1% by weight.

As a carbonate ion and/or hydrogen carbonate ion material, sodium hydrogen carbonate was used. As a light metal/transition metal ion material, copper sulfate, 5-hydrate was used. Ion exchanged water was used as water. To adjust pH, 1 mol/L aqueous hydrochloric acid solution from Wako Pure Chemical Industries, Ltd. was used. pH of the aqueous solutions was measured according to a conventional method.

Aqueous solutions according to Example 24 to Example 26 set forth in Table 3 were prepared with the materials described above. No precipitates were observed during or after the preparation of the aqueous solutions.

The prepared aqueous solutions were filtered by dead end filtration with centrifugation at 4000 G, for 15 minutes. The filter membrane that is made of regenerated cellulose and has a fractionation molecular weight of 50,000 was used.

The solutions that have passed through the filter membrane were collected and the amounts of LA and LG contained in the solutions were measured by high performance liquid chromatography. The measurement conditions were set according to the method of Bordin et al (Journal of Chromatography A. (2001) 928, 1, 63-76).

The LA/LG ratio of a filtrate obtained by adding whey protein, a component generating carbonate ion and/or hydrogen carbonate ion, and a light metal and/or transition metal salt, adjusting pH of the solution containing these, and then filtrating the solution with a membrane was higher at all pH than the solutions before treatment. Accordingly, it was found that Complex 2 tends to not pass through the filter membrane and LA tends to pass through the filter membrane and LA and Complex 2 were fractionated to obtain a composition containing LA as a filtrate. The percent recovery of LA was 35%, 39%, and 29% in in Example 24 to Example 26, respectively.

### [Table 3]

**(Table 3)**

| | Whey protein | | | Hydrogen carbonate ion/carbonate ion | | Metal ion | | Filter membrane | | | Concentration treatment | | | |
|---|---|---|---|---|---|---|---|---|---|---|---|---|---|---|
| | Material used | LA/LG ratio | Concentration (% by weight) | Material used | Concentration (% by weight) | Material used | Concentration (% by weight) | Material | Fractionation molecular weight (× 1,000) | pH | Amount treated with membrane (g) | LA/LG ratio of filtrate through filter membrane | Amount of filtrate through filter membrane (g) | Percent recovery of LA (%) |
| Example 24 | Whey powder 3 | 0.3 | 10 | Sodium hydrogen carbonate | 1 | Copper sulfate, 5-hydrate | 1 | Regenerated cellulose | 50 | 5.4 | | 6.8 | 2.52 | 35 |
| Example 25 | | | | | | | | | | 6.6 | 4 | 7.4 | 2.53 | 39 |
| Example 26 | | | | | | | | | | 8.0 | | 7.1 | 2.55 | 29 |

### (Test Example 4: Production of composition containing LA)

### Materials

As a whey protein material, Whey powder 1 was used. As a carbonate ion and/or hydrogen carbonate ion material, sodium hydrogen carbonate was used. Iron sulfate, 7-hydrate was used as a light metal and/or transition metal ion material. Ion exchanged water was used as water.

The amounts of LA and LG were measured by high performance liquid chromatography. The measurement conditions were set according to the method of Bordin et al (Journal of Chromatography A. (2001) 928, 1, 63-76).

Thirty kilograms of aqueous solution according to Example 27 set forth in Table 4 was prepared with the materials described above. No precipitates were observed during or after the preparation of the aqueous solutions.

This aqueous solution was subjected to concentration treatment A by cross-flow filtration with a filter membrane (made of a polyacrylonitrile material, having a fractionation molecular weight of 50,000, and an area of membrane of 0.20 square meters). The conditions of filtration treatment were 10°C in temperature and 0.2 MPa in average working pressure. With this treatment, 10 kg of a concentrate and 20 kg of a filtrate (composition containing LA) were obtained.

Twenty kilograms of the filtrate was subjected to concentration treatment B by cross-flow filtration with a filter membrane (made of a polyethersulfone material, having a fractionation molecular weight of 10,000, and an area of membrane of 1.00 square meters). The conditions of filtration treatment were 10°C in temperature and 0.4 MPa in average working pressure. With this treatment, 2 kg of a concentrate (composition containing LA) and 18 kg of a filtrate were obtained. LA and LG were not found in the filtrate.

The DF treatment of the concentrate obtained in the concentration treatment A was then performed. The filter membrane and working conditions were the same as the concentration treatment A. The DF treatment was terminated when the filtrate (composition containing LA) became 18 kg.

The concentrate obtained at the concentration treatment A and the filtrate obtained at the DF treatment were subjected to heat sterilization according to a conventional method and then freeze-dried to obtain a powdered composition containing LA (Example 27).

The LA/LG ratio of the dried powdered composition containing LA was 6.8, which was markedly higher than 0.3 of Whey powder 1 before the treatment. The percent recovery of LA was 85%.

### [Table 4]

**(Table 4)**

| | Whey protein | | | Hydrogen carbonate ion/calbonate ion | | Metal ion | | Filter membrane | | Ultrafiltration treatment | |
|---|---|---|---|---|---|---|---|---|---|---|---|
| | Material used | LA/LG ratio | Concentration (% by weight) | Material used | Concentration (% by weight) | Material used | Concentration (% by weight) | Material | Fractionation molecular weight (× 1,000) | LA/LG ratio of filtrate through filter membrane | Percent recovery of LA (%) |
| Example 27 | Whey powder 1 | 0.3 | 0.1 | Sodium hydrogen carbonate | 0.1 | Iron sulfate, 7-hydrate | 0.01 | Polyacrylonitrile | 50 | 6.8 | 85 |

### (Test Example 5: Production of composition containing native LA)

### Materials

Fresh milk (14% total solid contents and 4.1% fat contents) was used as a protein source.

As a carbonate ion and/or hydrogen carbonate ion material, sodium hydrogen carbonate was used. Ferric chloride, 6-hydrate was used as a light metal ion and/or transition metal material. Ion exchanged water was used as water.

The amounts of LA and LG were measured by high performance liquid chromatography. The measurement conditions were set according to the method of Bordin et al (Journal of Chromatography A. (2001) 928, 1, 63-76).

Fresh milk was treated with a centrifuge to obtain nonfat milk, from which fat contents were removed. This nonfat milk was subjected to cross-flow filtration with a filter membrane (made of a ceramic material, with a fractionation molecular weight of 0.1 µm, and an area of membrane of 1.05 square meters) to obtain a filtrate containing 0.05% by weight whey protein.

Thirty kilograms of an aqueous solution according to Example 28 was prepared by adding 0.05% by weight sodium hydrogen carbonate and 0.005% by weight ferric chloride, 6-hydrate in terms of iron ion to the aqueous solution containing this whey protein. No precipitates were observed during or after the preparation of the aqueous solutions.

This aqueous solution was subjected to cross-flow filtration with a filter membrane (made of a polyacrylonitrile material, having a fractionation molecular weight of 50,000, and an area of membrane of 0.20 square meters). The conditions of filtration treatment were 10°C in temperature and 0.2 MPa in average working pressure. 10 kg of a concentrate. With this treatment, 20 kg of a filtrate (composition containing LA) were obtained. The LA/LG ratio of this filtrate was 4.13, which is markedly higher than 0.5 before the treatment.

The concentrate obtained in the previous stage was he subjected to a DF treatment. The filter membrane and working conditions used were the same as those described for the previous stage. The DF treatment was terminated when the filtrate (composition containing LA) became 18 kg.

The filtrates obtained in the stage before the previous stage and the previous stage were subjected to cross-flow filtration with a filter membrane (made of a polyethersulfone material, having a fractionation molecular weight of 10,000, and an area of membrane of 1.00 square meters). The conditions of the filtration treatment were 10°C in temperature and 0.4 MPa in average working pressure. With this treatment, 4 kg of a concentrate (composition containing LA) and 34 kg of a filtrate were obtained. LA and LG were not found in the filtrate.

The concentrate of the previous stage was subjected to freeze-drying according to a conventional method to obtain a dried powdered composition containing LA (Example 28). The LA/LG ratio of Example 28 was 4.1 and denatured LA was 1%. Moreover, the percent recovery of LA was 62%.

### (Test Example 6: Production of composition containing LA)

### Materials

As a whey protein material, Whey powder 2 was used.

As a carbonate ion and/or hydrogen carbonate ion material, sodium hydrogen carbonate was used. As a light metal/transition metal ion material, copper sulfate, 5-hydrate was used. Ion exchanged water was used as water.

The amounts of LA and LG were measured by high performance liquid chromatography. The measurement conditions were set according to the method of Bordin et al (Journal of Chromatography A. (2001) 928, 1, 63-76).

Three-hundreds grams of an aqueous solution according to Example 29 set forth in Table 5 was prepared. No precipitates were observed during or after the preparation of the aqueous solutions.

This aqueous solution was subjected to cross-flow filtration with a filter membrane (made of a polyethersulfone material, having a fractionation molecular weight of 50,000, and an area of membrane of 0.20 square meters). The conditions of the filtration treatment were 10°C in temperature and 2.5 bar in average working pressure. With this treatment, 90 g of a concentrate and 200 g of a filtrate (composition containing LA) were obtained.

A concentrate obtained in the previous stage was subjected to a DF treatment. The filter membrane and working conditions used were the same as those described for the previous stage. The DF treatment was terminated at the time when the filtrate (composition containing LA) became 180 g.

Three-hundreds and eighty grams of the filtrates obtained in the stage before the previous stage and the previous stage were subjected to cross-flow filtration with a filter membrane (made of a polyethersulfone material, having a fractionation molecular weight of 5,000, and an area of membrane of 0.050 square meters). The conditions of the filtration treatment were 10°C in temperature and 2.5 bar in average working pressure. With this treatment, 40 g of a concentrate (composition containing LA) and 340 g of a filtrate were obtained. LA and LG were not found in the filtrate.

This concentrate was subjected to freeze-drying according to a conventional method to obtain a dried powdered composition containing LA (Example 29). The LA/LG ratio in the dried powder was 5.2 and denatured LA was 31%. Moreover, the percent recovery of LA was 96%.

### [Table 5]

**(Table 5)**

| | Whey protein | | | Hydrogen carbonate ion/carbonate ion | | Metal ion | | Filter membrane | | Ultrafiltration membrane treatment | |
|---|---|---|---|---|---|---|---|---|---|---|---|
| | Material used | LA/LG ratio | Concentration (% by weight) | Material used | Concentration (% by weight) | Material used | Concentration (% by weight) | Material | Fractionation molecular weight (× 1,000) | LA/LG ratio of filtrate through filter membrane | Percent recovery of LA (%) |
| Example 29 | Whey powder 2 | 0.3 | 10 | Sodium hydrogen carbonate | 10 | Copper sulfate, 5-hydrate | 1 | Polyethersulfone | 50 | 5.2 | 96 |

### (Test Example 7: Fractionation of LA and LG by formation of Complex 2)

### Materials

As a whey protein material, Whey powder 2 was used. As a carbonate ion and/or hydrogen carbonate ion material, sodium hydrogen carbonate was used. Magnesium chloride, 6-hydrate was used as a light metal ion material and ferric sulfate was used as a transition metal ion material. Ion exchanged water was used as water. Aqueous solutions according to Example 30 to Example 36 set forth in Table 6 were prepared with the materials described above. No precipitates were observed during or after the preparation of the aqueous solutions.

The prepared aqueous solutions were filtered by dead end filtration with centrifugation at 4000 G, for 15 minutes. A filter membrane that is made of regenerated cellulose and has a fractionation molecular weight of 50,000 was used.

The solution passed through a membrane filter was collected and the amounts of LA and LG contained in the filtrate were measured. The amounts of LA and LG were measured by high performance liquid chromatography. The measurement conditions were set according to the method of Bordin et al (Journal of Chromatography A. (2001) 928, 1, 63-76).

Examples 30 to 36, which were the filtrates obtained by forming Complex 2 and filtering the solutions with a membrane as filtrates containing LA, had increased LA/LG ratios as set forth in Table 6. Accordingly, it was found that Complex 2 tends to not pass through the filter membrane and LA tends to pass through the filter membrane and LA and Complex 2 were fractionated to obtain a composition containing LA as a filtrate.

Moreover, Example 30 to Example 36 set forth in Table 6 had higher LA/LG ratios and were fractionated more efficiently at all conditions than the solutions before the treatment and Comparative Examples set forth in Table 1. The percent recovery of LA was 33% to 45%.

### [Table 6]

**(Table 6)**

| | Whey protein | | | Hydrogen carbonate ion/cartbonate ion | | Metal ion | | Filter membrane | | Ultrafiltration membrane treatment | |
|---|---|---|---|---|---|---|---|---|---|---|---|
| | Material used | LA/LG ratio | Concentration (% by weight) | Material used | Concentration (% by weight) | Material used | Concentration (% by weight) | Material | Fractionation molecular weight (× 1,000) | LA/LG ratio of filtrate through filter membrane | Percent recovery of LA (%) |
| Example 30 | Whey powder 2 | 0.3 | 0.05 | Sodium hydrogen carbonate | 0.05 | Ferric sulfate | 0.005 | Regenerated cellulose | 50 | 3.5 | 45 |
| Example 31 | | | 0.01 | | 0.005 | Ferric sulfate | 0.0005 | | | 4.2 | 39 |
| Example 32 | | | 0.005 | | 0.005 | Ferric sulfate | 0.0002 | | | 3.8 | 33 |
| Example 33 | | | 0.001 | | 0.001 | Ferric sulfate | 0.00005 | | | 4.7 | 38 |
| Example 34 | | | 0.05 | | 0.2 | Magnesium chloride | 0.02 | | | 3.9 | 36 |
| Example 35 | | | 0.01 | | 0.02 | Magnesium chloride | 0.002 | | | 4.5 | 38 |
| Example 36 | | | 0.005 | | 0.001 | Magnesium chloride | 0.00001 | | | 3.8 | 41 |

### (Test Example 8)

### Materials

As whey protein materials, Whey powder 1 and Whey powder 2 were used. Whey powder 1 is a powder obtained by subjecting cheese whey to ion exchanging and ultrafiltration treatments to have a whey protein content of 93.9% by weight. Whey powder 2 is a powder obtained by subjecting acid whey to ion exchanging and ultrafiltration treatments to have a whey protein content of 93.5% by weight.

As a carbonate ion and/or hydrogen carbonate ion material, sodium hydrogen carbonate was used.

Magnesium chloride, 6-hydrate and potassium chloride were used as light metal ion materials and manganese dichloride 4-hydrate, iron sulfate, 7-hydrate, ferric chloride, 6-hydrate, ferric sulfate, and copper sulfate, 5-hydrate were used as transition metal ion materials.

Sodium hydroxide was used for the preparation of Comparative Examples. All the water used in Examples and Comparative Example was ion exchanged water.

Aqueous solutions according to Example 37 to Example 56 and Comparative Example 6 to Comparative Example 10 set forth in Table 7 were prepared. pH of the prepared aqueous solution was 7.8-8.3. No precipitates were observed during or after the preparation of the aqueous solutions.

The prepared aqueous solutions were filtered by dead end filtration with centrifugation at 4000 G, for 15 minutes. Filter membranes that are made of polyethersulfone and have fractionation molecular weights of 50,000, 100,000, and 300,000 and one that is made of regenerated cellulose and has a fractionation molecular weight of 50,000 were used.

Example 37 to Example 56 and Comparative Example 6 to Comparative Example 10 were obtained as concentrates retained before the filter membrane and the amounts of LG and LA contained in the concentrate were measured. The amounts of LA and LG were measured by high performance liquid chromatography. The measurement conditions were set according to the method of Bordin et al (Journal of Chromatography A. (2001) 928, 1, 63-76).

As illustrated in Table 7, the LG/LA ratio of the concentrates obtained by adding whey protein, a component generating carbonate ion and/or hydrogen carbonate ion, and a light metal and/or transition metal salt and filtrating the solution containing these with a membrane was increased. Accordingly, it was found that Complex 2 containing LG tends to not pass through the filter membrane and LA tends to pass through the filter membrane and Complex 2 containing LG and LA were fractionated to obtain a composition containing LG as a concentrate.

Examples set forth in Table 7 had higher LG/LA ratios at all conditions than Comparative Examples, to which only a light metal was added, and LG and LA were fractionated more efficiently in Examples 37 to 56 than in Comparative Examples 6 to 10.

The LG/LA ratio was high in the filtrates through the membrane filters having a fractionation molecular weight of 50,000. Meanwhile, there was no difference between membranes made of regenerated cellulose and polyethersulfone.

The LG/LA ratios of the filtrates obtained by filtration similar to that described above after allowing the aqueous solutions of Example 37 to Example 50 and Comparative Example 6 to Comparative Example 10 before filtration to stand at 10°C for 24 hours were 97-102% of the values set forth in Table 7 and approximately the same (data not shown). Moreover, no precipitates were observed in the solutions allowed to stand for 24 hours.

### [Table 7]

**(Table 7)**

| | Whey protein | | | Hydrogen carbonate ion/carbonate ion | | Metal ion | | Filter membrane | | LG/LA ratio of concentrate with filter membrane |
|---|---|---|---|---|---|---|---|---|---|---|
| | Material used | LG/LA ratio | Concentration (% by weight) | Material used | Concentration (% by weight) | Material used | Concentration (% by weight) | Material | Fractionation molecular weight (× 1,000) | |
| Example 37 | Whey powder 1 | 3.24 | 1 | Sodium hydrogen carbonate | 0.01 | Potassium chloride | 0.1 | Polyethersulfone | 50 | 3.38 |
| Example 38 | | | | | | Magnesium chloride, 6-hydrate | | | | 3.67 |
| Example 39 | | | | | | Manganese dichloride, 4-hydrate | | | | 3.48 |
| Example 40 | | | | | | Ferric chloride, 6-hydrate | | | | 4.54 |
| Example 41 | | | | | | Iron sulfate, 7-hydrate | | | | 4.32 |
| Example 42 | | | | | | Ferric sulfate | | | | 4.27 |
| Example 43 | | | | | | Copper sulfate, 5-hydrate | | | | 5.27 |
| Comparative Example 6 | | | | - | 0 | Sodium hydroxide | | | | 3.10 |
| Example 44 | Whey powder 2 | 3.14 | 1 | Sodium hydrogen carbonate | 0.01 | Ferric chloride, 6-hydrate | 0.1 | Regenerated cellulose | 50 | 4.78 |
| Example 45 | | | | | | Iron sulfate, 7-hydrate | | | | 4.23 |
| Example 46 | | | | | | Ferric sulfate | | | | 4.22 |
| Example 47 | | | | | | Copper sulfate, 5-hydrate | | | | 5.53 |
| Comparative Example 7 | | | | - | 0 | Sodium hydroxide | | | | 3.12 |
| Example 48 | | | | Sodium hydrogen carbonate | 0.01 | Ferric chloride, 6-hydrate | 0.1 | Polyethersulfone | | 4.44 |
| Example 49 | | | | | | Iron sulfate, 7-hydrate | | | | 4.33 |
| Example 50 | | | | | | Ferric sulfate | | | | 4.35 |
| Example 51 | | | | | | Copper sulfate, 5-hydrate | | | | 5.23 |
| Comparative Example 8 | | | | - | 0 | Sodium hydroxide | | | | 3.15 |
| Example 52 | | | | Sodium hydrogen carbonate | 0.01 | Ferric chloride, 6-hydrate | 0.1 | Polyethersulfone | 100 | 5.23 |
| Example 53 | | | | | | Iron sulfate, 7-hydrate | | | | 4.85 |
| Example 54 | | | | | | Copper sulfate, 5-hydrate | | | | 4.93 |
| Comparative Example 9 | | | | - | 0 | Sodium hydroxide | | | | 3.13 |
| Example 55 | | | | Sodium hydrogen carbonate | 0.01 | Ferric chloride, 6-hydrate | 0.1 | | 300 | 3.52 |
| Example 56 | | | | | | Copper sulfate, 5-hydrate | | | | 4.73 |
| Comparative Example 10 | | | | - | 0 | Sodium hydroxide | | | | 3.23 |

### (Test Example 9)

### Materials

As a whey protein material, Whey powder 1 was used.

As a carbonate ion and/or hydrogen carbonate ion material, sodium hydrogen carbonate was used. As a light metal/transition metal ion material, copper sulfate, 5-hydrate was used. Ion exchanged water was used as water.

The amounts of LG and LA were measured by high performance liquid chromatography. The measurement conditions were set according to the method of Bordin et al (Journal of Chromatography A. (2001) 928, 1, 63-76).

Thirty kilograms of an aqueous solution according to Example 57 set forth in Table 8 was prepared with the materials described above. No precipitates were observed during or after the preparation of the aqueous solutions.

This aqueous solution was subjected to cross-flow filtration with a filter membrane (made of polyacrylonitrile, fractionation molecular weight: 50,000, area of membrane 0.20 square meters). The conditions of filtration treatment were 10°C in temperature and 0.2 MPa in average working pressure. With this treatment, 10 kg of a concentrate (composition containing LG) and 20 kg of a filtrate were obtained.

Ten kilograms of the concentrate obtained was then subjected to a DF treatment. The DF treatment was terminated at the time when 18 kg of the filtrate was obtained.

To the DF treated concentrate, 1% by weight of L-ascorbic acid was added and gently stirred for 60 minutes at room temperature and then this was further subjected to a filtration treatment. The filtration was performed with a filter membrane (made of a polyacrylonitrile material, having a fractionation molecular weight of 50,000, and an area of membrane of 0.20 square meters) at 10°C and 0.2 MPa in average working pressure.

The concentrate obtained in the previous stage was powdered by a freeze-drying treatment. In this way, a composition containing LG having an increased LG/LA ratio of 7.21, in comparison with the LG/LA ratio 3.24 of the solution before the treatment, and a metal content of 0.5% by weight was obtained (Example 57).

### [Table 8]

**(Table 8)**

| | Whey protein | | | Hydrogen carbonate ion/carbonate ion | | Metal ion | | Filter membrane | | LG/LA ratio of concentrate with filter membrane |
|---|---|---|---|---|---|---|---|---|---|---|
| | Material used | LG/LA ratio | Concentration (% by weight) | Material used | Concentration (% by weight) | Material used | Concentration (% by weight) | Material | Fractionation molecular weight (× 1,000) | |
| Example 57 | Whey powder 1 | 3.24 | 0.1 | Sodium hydrogen carbonate | 0.1 | Copper sulfate, 5-hydrate | 0.01 | Polyacrylonitrile | 50 | 7.21 |

### (Test Example 10)

### Materials

As whey protein materials, Whey powder 1 and Whey powder 2 were used.

For the preparation of Reference Example 58, sodium hydrogen carbonate was used as a carbonate ion and/or hydrogen carbonate ion material and ion exchanged water was used as water.

For Reference Example 59 and Reference Example 60, ion exchanged water saturated with carbon dioxide (carbonated water) was used as a carbonate ion and/or hydrogen carbonate ion material.

Aqueous solutions according to Reference Example 58 to Reference Example 60 set forth in Table 9 were prepared with the materials described above. No precipitates were observed during or after the preparation of the aqueous solutions.

The prepared aqueous solutions were filtered by dead end filtration with centrifugation at 4000 G, for 15 minutes. The filter membrane that is made of polyethersulfone and has a fractionation molecular weight of 50,000 was used.

Concentrates were collected and the amounts of LG and LA contained in the concentrates were measured. The amounts of LG and LA were measured by high performance liquid chromatography. The measurement conditions were set according to the method of Bordin et al (Journal of Chromatography A. (2001) 928, 1, 63-76).

As illustrated in Table 9, the LG/LA ratio of the obtained concentrates were increased by adding whey protein and a component generating carbonate ion and/or hydrogen carbonate ion and filtrating the solution containing these with a membrane. Accordingly, it was found that Complex 1 containing LG tends to not pass through the filter membrane and LA tends to pass through the filter membrane and LA and Complex 1 containing LG were fractionated to obtain a composition containing LG as a filtrate.

Moreover, Reference Example 58 to Reference Example 60 set forth in Table 9 had a higher LG/LA ratio and LG and LA were fractionated more efficiently at all conditions than the solutions before the treatment and Comparative Example 6 to Comparative Example 10 set forth in Table 7.

The LG/LA ratios of the filtrates obtained by filtration similar to that described above after allowing the aqueous solutions of Reference Example 58 to Reference Example 60 before filtration to stand at 10°C for 24 hours were 95-101% of the values set forth in Table 9 and approximately the same (data not shown). Moreover, no precipitates were observed in the solutions allowed to stand for 24 hours.

### [Table 9]

**(Table 9)**

| | Whey protein Filter membrane | | | | | Hydrogen carbonate ion/carbonate ion | LG/LA ratio of concentrate with filter membrane |
|---|---|---|---|---|---|---|---|
| | Material used | LG/LA ratio | Concentration (% by weight) | Material | Fractionation molecular weight (× 1,000) | | |
| Reference Example 58 | Whey powder 1 | 3.24 | 15 | Polyethersulfone | 50 | 1.5% by weight sodium hydrogen carbonate | 3.88 |
| Reference Example 59 | | | | | | Saturated carbonated water | 3.92 |
| Reference Example 60 | Whey powder 2 | 3.14 | | | | | 4.13 |

### (Test Example 11)

Reference Example 60 was powdered by freeze-drying (Example 61). The water content of Example 61 stored at 10°C for 1 month was 5.1% by weight. This was dissolved in ion exchanged water to prepare an aqueous solution at a concentration of 1% by weight. To this aqueous solution, 0.01% by weight ferric chloride, 6-hydrate was added and the mixture was stirred and sterilized by heating to 95°C. After heat sterilization, the solution was cooled to 10°C immediately and stored at 10°C for 3 days just after the cooling and the state of the aqueous solution was observed by viewing.

As a result, neither precipitates nor cloudiness were found just after cooling and after 3 days of storing at 10°C and the powdered composition containing LG had the ability to solubilize metals.

### (Test Example 12)

Fresh milk (14% total solid contents and 4.1% fat contents) was used as a protein source.

As a carbonate ion and/or hydrogen carbonate ion material, sodium hydrogen carbonate was used. Ferric chloride, 6-hydrate was used as a light metal ion and/or transition metal material. Ion exchanged water was used as water.

The amounts of LG and LA were measured by high performance liquid chromatography. The measurement conditions were set according to the method of Bordin et al (Journal of Chromatography A. (2001) 928, 1, 63-76).

Fresh milk was treated with a centrifuge to obtain nonfat milk, from which fat contents were removed. This nonfat milk was subjected to cross-flow filtration with a filter membrane (made of a ceramic material, with a fractionation molecular weight of 0.1 µm, and an area of membrane of 1.05 square meters) to obtain a filtrate containing 0.05% by weight whey protein.

Thirty kilograms of an aqueous solution according to Example 62 was prepared by adding 0.05% by weight sodium hydrogen carbonate and 0.005% by weight ferric chloride, 6-hydrate in terms of iron ion to this aqueous solution containing whey protein. No precipitates were observed during or after the preparation of the aqueous solutions.

This aqueous solution was subjected to cross-flow filtration with a filter membrane (made of polyacrylonitrile, fractionation molecular weight: 50,000, area of membrane 0.20 square meters). The conditions of filtration treatment were 10°C in temperature and 0.2 MPa in average working pressure. With this treatment, 20 kg of a filtrate and 10 kg of a composition containing LG as a concentrate were obtained.

The LG/LA ratio of this concentrate was 5.22, which is markedly higher than 2.14 before the treatment.

This concentrate was further subjected to a DF treatment. The DF treatment was terminated at the time when an amount of filtrate of 18 kg was achieved.

To the DF treated concentrate, 1% by weight of L-ascorbic acid was added and gently stirred for 60 minutes at room temperature and then this was further subjected to a filtration treatment. The filtration was performed with a filter membrane (made of a polyacrylonitrile material, having a fractionation molecular weight of 50,000, and an area of membrane of 0.20 square meters) at 10°C and 0.2 MPa in average working pressure.

The concentrate of the previous stage was subjected to freeze-drying according to a conventional method to obtain a dried powdered composition containing LG (Example 62). The LG/LA ratio in the dried powder was 4.98 and denatured LG was 1%. Moreover, the percent recovery of LG was 65%.

### (Test Example 13)

### Materials

As a whey protein material, Whey powder 2 was used. As a carbonate ion and/or hydrogen carbonate ion material, sodium hydrogen carbonate was used. Magnesium chloride, 6-hydrate was used as a light metal ion material and ferric sulfate was used as a transition metal ion material. Ion exchanged water was used as water. Aqueous solutions according to Example 63 to Example 69 set forth in Table 10 were prepared with the materials described above. No precipitates were observed during or after the preparation of the aqueous solutions.

The prepared aqueous solutions were filtered by dead end filtration with centrifugation at 4000 G, for 15 minutes. A filter membrane that is made of regenerated cellulose and has a fractionation molecular weight of 50,000 was used.

The solution retained before the filter membrane was collected and the amounts of LG and LA contained in the concentrate were measured. The amounts of LG and LA were measured by high performance liquid chromatography. The measurement conditions were set according to the method of Bordin et al (Journal of Chromatography A. (2001) 928, 1, 63-76).

As illustrated in Table 10, the LG/LA ratio of the obtained concentrate was increased by adding whey protein, a component generating carbonate ion and/or hydrogen carbonate ion, and a light metal and/or transition metal salt and filtrating the solution containing these with a membrane. Accordingly, it was found that Complex 2 containing LG tends to not pass through the filter membrane and LA tends to pass through the filter membrane and LA and Complex 2 containing LG were fractionated to obtain a composition containing LG as a filtrate.

### [Table 10]

**(Table 10)**

| | Whey protein | | | Hydrogen carbonate ion/carbonate ion | | Metal ion | | Filter membrane | | Ultrafiltration membrane treatment |
|---|---|---|---|---|---|---|---|---|---|---|
| | Material used | LG/LA ratio | Concentration (% by weight) | Material used | Concentration (% by weight) | Material used | Concentration (% by weight) | Material | Fractionation molecular weight (× 1,000) | LG/LA ratio of concentrate with filter membrane |
| Example 63 | Whey powder 2 | 3.14 | 0.05 | Sodium hydrogen carbonate | 0.05 | Ferric sulfate | 0.005 | Regenerated cellulose | 50 | 5.46 |
| Example 64 | | | 0.01 | | 0.005 | Ferric sulfate | 0.0005 | | | 4.77 |
| Example 65 | | | 0.005 | | 0.005 | Ferric sulfate | 0.0002 | | | 4.55 |
| Example 66 | | | 0.001 | | 0.001 | Ferric sulfate | 0.00005 | | | 4.92 |
| Example 67 | | | 0.05 | | 0.2 | Magnesium chloride | 0.02 | | | 4.75 |
| Example 68 | | | 0.01 | | 0.02 | Magnesium chloride | 0.002 | | | 4.92 |
| Example 69 | | | 0.005 | | 0.001 | Magnesium chloride | 0.00001 | | | 5.13 |

## Claims

1. A method for fractionating whey proteins, comprising:
preparing a solution comprising a first whey protein, wherein the first whey protein is a whey protein mainly comprising β-lactoglobulin, a second whey protein, wherein the second whey protein is a whey protein mainly comprising α-lactalbumin and a carbonate ion and/or hydrogen carbonate ion, and a light metal ion and/or a transition metal ion, wherein the light metal and/or transition metal ions are selected from sodium, potassium, magnesium, calcium, manganese, iron, copper, and zinc ions;
wherein the first whey protein mainly comprising β-lactoglobulin forms a complex with a carbonate ion and/or hydrogen carbonate ion, and a light metal ion and/or a transition metal ion; and
the second whey protein mainly comprising α-lactalbumin satisfies the following (1):
(1) the α-lactalbumin forms no complex with any of carbonate ion and hydrogen carbonate ion;
separating the first whey protein complex and the second whey protein with a membrane.

2. The method for fractionating whey proteins according to claim 1, wherein the solution has a total concentration of the first whey protein and the second whey protein of 0.001% by weight to 35% by weight; a total concentration of the carbonate ion and/or the hydrogen carbonate ion of 0.001% by weight to 35% by weight; and a pH of 5 to 10.

3. The method for fractionating whey proteins according to claim 1 or 2, wherein a total concentration of the light metal ion and/or the transition metal ion is 0.00001% by weight to 10% by weight.

4. The method for fractionating whey proteins according to any one of claims 1 to 3, comprising one or more steps selected from the group consisting of a concentration step, a diafiltration step, a sterilization step, a freezing step, a drying step, and a powdering step.

## Patentansprüche

1. Verfahren zur Fraktionierung von Molkenproteinen, das Folgendes aufweist:
Herstellen einer Lösung, die ein erstes Molkenprotein, wobei das erste Molkenprotein ein hauptsächlich β-Lactoglobulin aufweisendes Molkenprotein ist, ein zweites Molkenprotein, wobei das zweite Molkenprotein ein hauptsächlich α-Lactalbumin aufweisendes Molkenprotein ist, und ein Carbonat-Ion und/oder Hydrogencarbonat-Ion und ein Leichtmetall-Ion und/oder ein Übergangsmetall-Ion aufweist, wobei das Leichtmetall-Ion- und/oder das Übergangsmetall-Ion aus Natrium-, Kalium-, Magnesium-, Calcium-, Mangan-, Eisen-, Kupfer- und Zink-Ionen ausgewählt wird;
wobei das erste, hauptsächlich β-Lactoglobulin aufweisende Molkenprotein einen Komplex mit einem Carbonat-Ion und/oder einem Hydrogencarbonat-Ion und einem Leichtmetall-Ion und/oder einem Übergangsmetall-Ion bildet; und
das zweite, hauptsächlich α-Lactalbumin aufweisende Molkenprotein Folgendes erfüllt (1):
(1) das α-Lactalbumin bildet mit keinem von Carbonat-Ion und Hydrogencarbonat-Ion einen Komplex;
Trennen des ersten Molkenproteinkomplexes und des zweiten Molkenproteins mit einer Membran.

2. Verfahren zur Fraktionierung von Molkenproteinen nach Anspruch 1, wobei die Lösung eine Gesamtkonzentration des ersten Molkenproteins und des zweiten Molkenproteins von 0,001 Gewichts-% bis 35 Gewichts-%; eine Gesamtkonzentration des Carbonat-Ions und/oder des Hydrogencarbonat-Ions von 0,001 Gewichts-% bis 35 Gewichts-%; und einen pH-Wert von 5 bis 10 hat.

3. Verfahren zur Fraktionierung von Molkenproteinen nach Anspruch 1 oder 2, wobei eine Gesamtkonzentration des Leichtmetall-Ions und/oder des Übergangsmetall-Ions 0,00001 Gewichts-% bis 10 Gewichts-% ist.

4. Verfahren zur Fraktionierung von Molkenproteinen nach einem der Ansprüche 1 bis 3, das einen oder mehrere Schritte aufweist, die aus der Gruppe bestehend aus einem Konzentrationsschritt, einem Diafiltrationsschritt, einem Sterilisationsschritt, einem Gefrierschritt, einem Trocknungsschritt und einem Pulverisierungsschritt ausgewählt werden.

## Revendications

1. Procédé de fractionnement de protéines de lactosérum, comprenant :
préparer une solution comprenant une première protéine de lactosérum, dans lequel la première protéine de lactosérum est une protéine de lactosérum comprenant essentiellement de la β-lactoglobuline, une deuxième protéine de lactosérum, dans lequel la deuxième protéine de lactosérum est une protéine de lactosérum comprenant essentiellement de l'α-lactalbumine et un ion de carbonate et/ou un ion de carbonate d'hydrogène, et un ion de métal léger et/ou un ion de métal de transition, dans lequel les ions de métal léger et/ou de métal de transition sont sélectionnés parmi des ions de sodium, de potassium, de magnésium, de calcium, de manganèse, de fer, de cuivre et de zinc ;
dans lequel la première protéine de lactosérum comprenant essentiellement de la β-lactoglobuline forme un complexe avec un ion de carbonate et/ou un ion de carbonate d'hydrogène, et un ion de métal léger et/ou un ion de métal de transition ; et
la deuxième protéine de lactosérum comprenant essentiellement de l'α-lactalbumine satisfait à ce qui suit (1) :
(1) l'α-lactalbumine ne forme aucun complexe avec un ion de carbonate et un ion de carbonate d'hydrogène quelconque ;
séparer le complexe de la première protéine de lactosérum et la deuxième protéine de lactosérum avec une membrane.

2. Procédé de fractionnement de protéines de lactosérum selon la revendication 1, dans lequel la solution a une concentration totale de la première protéine de lactosérum et de la deuxième protéine de lactosérum de 0,001 % en poids à 35 % en poids ; et une concentration totale du ion de carbonate et/ou du ion de carbonate d'hydrogène de 0,001 % en poids à 35 % en poids ; et un pH de 5 à 10.

3. Procédé de fractionnement de protéines de lactosérum selon la revendication 1 ou 2, dans lequel une concentration totale du ion de métal léger et/ou du ion de métal de transition est de 0,00001 % en poids à 10 % en poids.

4. Procédé de fractionnement de protéines de lactosérum selon l'une quelconque des revendications 1 à 3, comprenant une ou plusieurs étapes sélectionnées parmi le groupe composé d'une étape de concentration, d'une étape de diafiltration, d'une étape de stérilisation, d'une étape de congélation, d'une étape de séchage et d'une étape de pulvérisation.
